# EUROPÄISCHE PATENTSCHRIFT

(11) **EP 1 308 079 B1**
(45) Veröffentlichungstag und Bekanntmachung des Hinweises auf die Patenterteilung: **06.12.2006**
(21) Anmeldenummer: 02021078.7
(22) Anmeldetag: 21.09.2002
(51) Int. Cl.: A01F 15/07

(54) **Rundballenpresse**
Rotobaler
Ramasseuse-presse à balle cylindrique

(30) Priorität: 30.10.2001 DE 10153540
(43) Veröffentlichungstag der Anmeldung: 07.05.2003
(73) Patentinhaber: DEERE & COMPANY, Moline, Illinois 61265-8098 (US)
(72) Erfinder: Viaud, Jean, 70100 Gray (FR); Lucand, Philippe, 70120 Melin (FR)
(74) Vertreter: Magin, Ludwig Bernhard

(56) Entgegenhaltungen:
- EP-A- 0 894 428
- DE-A- 19 851 470
- FR-A- 2 460 099
- US-A- 3 914 926
- US-A- 4 172 354
- US-A- 4 393 764
- US-A- 4 912 918

## Beschreibung

Die Erfindung betrifft eine Rundballenpresse nach dem Oberbegriff des Anspruchs 1 mit wenigstens einem flexiblen endlosen Pressmittel, das über ortsfeste und bewegliche Drehkörper geführt ist und einen Ballenpreßraum umfangsseitig im wesentlichen umgibt.

Das Buch FMO-141B Ausgabe D-00 zeigt auf Seite 153 eine Rundballenpresse mit festen Seitenwänden, zwischen denen sich ortsfeste und positionsveränderliche drehbare Rollen erstrecken, über die Riemen geführt werden können. Einige der Rollen sind in einem Träger aufgenommen, der vertikal schwenkbar ist. Die Riemen verlaufen auch über Rollen an einem Spannarm, der unter der Spannung einer Feder stets in eine die Riemen spannende Stellung gedrängt wird. Der Vorteil dieser Bauart liegt darin, daß der Träger mit den wenigen Rollen leicht ist und großer Stellkräfte nicht bedarf. Nachteilig ist jedoch, daß der Träger weit angehoben werden muß, damit der fertige Rundballen ausgeworfen werden kann, zumal im Bodenbereich ein zweiter Satz Riemen vorgesehen ist, auf dem der Rundballen während seiner Bildung ruht.

Die DE-A1-198 51 470 offenbart eine Rundballenpresse mit nur einem einzigen Satz von Riemen, die über ortsfeste und positionsveränderliche Rollen in einem festen Gehäuse und einem schwenkbaren Gehäuseteil geführt sind. Es ist ebenfalls ein Spannarm vorgesehen, der die Riemen stets gespannt hält. Der Nachteil dieser Bauart besteht in den hohen Stellkräften, die nötig sind, um den beweglichen Gehäuseteil anzuheben und dem großen Stellweg, der erforderlich ist, um den Rundballen aus dem Preßraum auswerfen zu können.

Der Prospekt VERMEER 504 HE ohne Druckvermerk zeigt eine Rundballenpresse, bei der sich der Schwenkpunkt eines außerhalb des Ballenpreßraums verlaufenden Trägers nahezu im Zentrumsbereich des Ballenpreßraums befindet. An dem äußeren Endbereich des Trägers ist ein Arm vorgesehen, auf dem sich mehrere Rollen befinden, über die Riemen verlaufen und die in den Ballenpreßraum eintauchen können. In diesem Fall bildet die Spannvorrichtung mehrere Schlaufen, in denen sich Erntegut ansammeln kann.

Die nicht veröffentlichte europäische Patentanmeldung EP 1112927 offenbart eine Rundballenpresse mit festen Seitenwänden, außerhalb von denen Arme vertikal schwenkbar angebracht sind, an denen zwei voneinander beabstandete Rollen angebracht sind. Die Rollen bilden mit darüber verlaufenden Riemen zugleich den Boden des Pressraums und können entlang von Kanten zweier Seitenwände in eine angehobene Stellung gebracht werden, in der sich schnell eine ausreichend große Öffnung zum Boden ergibt, durch die der Rundballen austreten kann. Ein Spannarm ist im vorderen Bereich der Rundballenpresse vorgesehen und weist eine federbelastete Rolle auf, um die sich die Riemen in der Art einer Schlaufe erstrecken.

Eine weitere Rundballenpresse mit einem vertikal schwenkbaren Träger ist aus der US-A-4 172 354 bekannt.

Das der Erfindung zugrunde liegende Problem wird darin gesehen, eine kompakte Rundballenpresse mit geringen erforderlichen Stellkräften und -wegen während des Betriebs vorzuschlagen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Anordnung zweier benachbarter Drehkörper an dem Träger, zwischen denen sich das Pressmittel hindurch erstreckt, hat den Vorteil, daß das Pressmittel je nach der Stellung des Trägers einmal an dem einen Drehkörper und einmal an dem anderen Drehkörper anliegt. Auf diese Weise kann mittels des Trägers eine Schlaufe gebildet werden, so daß sich der Spannweg für den Spannmechanismus verkürzt. Das Pressmittel kann als ein Satz schmaler, paralleler Riemen, als ein Band oder als ein Stabkettenförderer ausgebildet sein. Die Drehkörper sind regelmäßig Rollen oder Walzen, es können insbesondere bei einem Stabkettenförderer auch Räder sein. Die Konstruktion des Trägers ist vielseitig denkbar, z. B. als ein flächiger Teil, als ein Fachwerk aus Rohren, als ein entsprechend gekrümmter Arm, als Seitenwand an sich oder dergleichen. Dieser Träger kann auch relativ massiv ausgebildet sein, wenn er sich außerhalb der Seitenwände des Ballenpreßraums erstreckt und bewegt. Da nur der Träger, dessen Rollen und die entsprechenden Riemenabschnitt zum Auswerfen des Ballens bewegt werden, hingegen nicht die Seitenwände, sind die Stellkräfte gering. Die Stellwege sind ebenfalls kurz, wenn der Träger mit seinen Drehkörpern und dem darüber verlaufenden Abschnitt des Pressmittels den Boden des Pressraums bildet und der Ballen bei einem geringen Hub des Trägers bereits auf den Boden fallen kann.

Eine Lagerung des Trägers wenigstens im Mittenbereich des Ballenpreßraums bewirkt anders als bei einer oberhalb von ihm vorgesehenen Lagerung eine schnelle Öffnung des Ballenpressraums zum Auswerfen des Ballens, so daß der Pressbetrieb sehr schnell wieder aufgenommen werden kann. Der angehobene Träger berührt auch deshalb kaum den ausgeworfenen Ballen, weil aufgrund seiner mindestens annähernd zentrischen Lagerung die radiale Erstreckung wesentlich geringer ist als beim Stand der Technik.

Der Stellweg des Trägers wird nicht durch feste Drehkörper beeinträchtigt, die sich im Grenzbereich des Ballenpreßraums befinden, wenn diese festen Drehkörper sich in einem Bereich befinden, in den der Träger mit seinen Drehkörpern nur bedingt eindringt und wenn die Drehkörper zwischen sich Platz belassen, in den der Träger eintauchen kann.

Dem einen Drehkörper auf dem Träger einerseits kann ein weiterer mit radialem Versatz zugeordnet werden, mit dem verhindert wird, daß sich die Trume des Pressmittels berühren. Alternativ könnte auch ein Drehkörper größeren Durchmessers verwendet werden.

Eine dreieckige Ausbildung des Trägers gewährleistet eine stabile aber zugleich platzsparende Bauform. Die Ausbildung des einen Eckbereichs als Lager führt zu einer sicheren Einleitung der Kräfte.

Wenn der Träger zugleich die Seitenwand des Ballenpreßraums darstellt, erfolgt dadurch eine Teilreduktion. Die Festigkeit kann statt durch Rohre, Streben oder dergleichen durch Stege, Sicken, Umkantungen oder dergleichen erzielt werden. Die Stellung der Drehkörper zu der Seitenwand bzw. den Seitenwänden verändert sich nicht. Wenn zum Auswerfen des Rundballens die Drehkörper mit dem Träger und somit den Seitenwänden angehoben werden, wird außerhalb des Ballenpreßraums sich angesammeltes Preßgut aus der Rundballenpresse ausgeworfen.

Wenn sich in dem Press- und in dem Endladebetrieb die beiden Drehkörper des Trägers, die eine Umlenkung des Preßmittels besorgen, den gleichen oder im wesentlichen den gleichen Abstand zu einem festen Drehkörper aufweisen, kann einmal eine maximale Verkürzung und ein andermal eine entsprechend maximale Verlängerung des Preßmittels bewirkt werden.

Wenn die Seitenwände gegenüber einem Fahrgestell der Rundballenpresse verstellbar sind, können sie zum Auswerfen des Rundballens voneinander beabstandet werden, so daß die Reibkräfte auf diesen entfallen und dieser leicht aus dem Ballenpreßraum austreten kann.

Drehkörper, die sich außerhalb des Ballenpreßraums erstrecken, also seitlich über diesen hinausragen, oder mindestens mit diesem abschließen und sich gegebenenfalls entlang der Endkanten der Seitenwände bewegen, lassen eine Bewegung der Seitenwände zu.

In der Zeichnung ist ein nachfolgend näher beschriebenes Ausführungsbeispiel der Erfindung dargestellt. Es zeigt:
- Fig. 1: eine erfindungsgemäße Rundballenpresse in einem leeren Betriebszustand in Seitenansicht und schematischer Darstellung,
- Fig. 2: die Rundballenpresse nach Figur 1 in einem teilweise gefüllten Zustand,
- Fig. 3: die Rundballenpresse nach Figur 1 in einem gefüllten Zustand und
- Fig. 4: die Rundballenpresse nach Figur 1 während des Entladevorgangs.

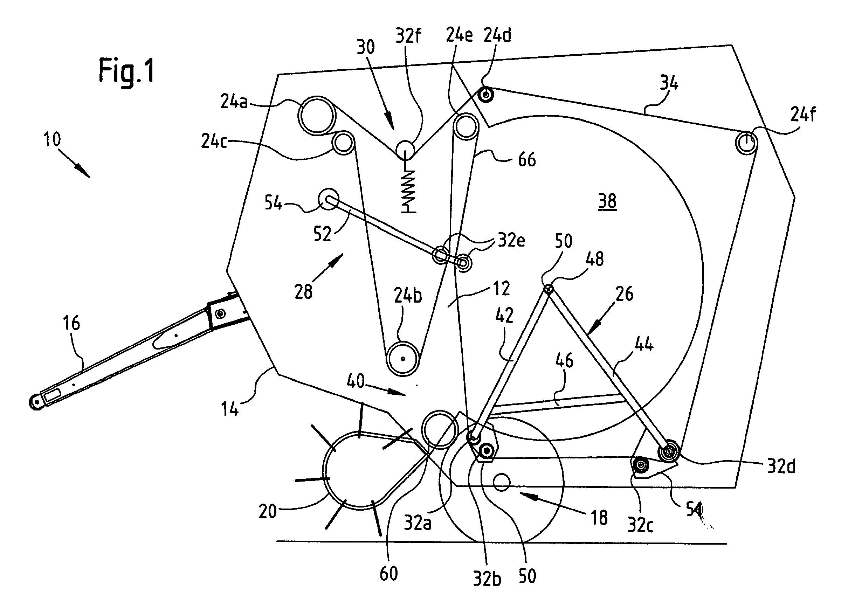

Figur 1 zeigt eine landwirtschaftliche Rundballenpresse 10 mit einem Ballenpreßraum 12. Die Rundballenpresse 10 weist unter anderem folgende Komponenten auf: ein Fahrgestell 14, eine Deichsel 16, ein Fahrwerk 18, eine Aufnahmevorrichtung 20, feste Drehkörper 24, einen Träger 26, einen Spannmechanismus 28, einen zweiten Spannmechanismus 30, ortsbewegliche Drehkörper 32 und ein Pressmittel 34.

Die Rundballenpresse 10 dient der Aufnahme von Erntegut, wie Stroh und Heu, das spiralförmig zu einem rund-zylindrischen Ballen 36 auf sich aufgerollt und gebunden und anschließend auf den Boden abgelegt wird. Während der Ballen 36 aus dem Ballenpreßraum 12 ausgeworfen wird, wird der Aufnahme- und Pressvorgang unterbrochen.

Der Ballenpreßraum 12 ist in seiner Größe veränderlich, d. h. sein Durchmesser nimmt mit der Größe des Ballens 36 zu. Während der Ballenpreßraum 12 umfangsseitig im wesentlichen von dem Pressmittel 34 umgeben wird, wird er seitlich von Seitenwänden 38 geschlossen. In einer nicht gezeigten Ausführung ist unterhalb des Ballenpreßraums 12 ein zweites Preßmittel vorgesehen, auf dem der Ballen 36 ganz oder teilweise ruht.

Das Fahrgestell 14 ist in bekannter Weise als ein Schweißzusammenbau ausgebildet, der die Deichsel 16, das Fahrwerk 18, die Aufnahmevorrichtung 20, die ortsfesten Drehkörper 24, den Träger 26, den Spannmechanismus 28, den zweiten Spannmechanismus 30 und die Seitenwände 38 zusammenhält bzw. trägt. Hierzu sind auch nicht gezeigte Querstreben vorgesehen, die für einen steifen räumlichen Zusammenbau sorgen. Der Aufbau des Fahrgestells 14 an sich ist herkömmlicher Natur.

Die Deichsel 16 dient dem Anschluß des Fahrgestells 14 an ein nicht gezeigtes Zugfahrzeug, z. B. einen Ackerschlepper.

Das Fahrwerk 18 enthält jeweils nicht gesondert bezeichnet eine Achse und Räder, mit denen sich das Fahrgestell 14 auf dem Boden abstützt. Das Fahrwerk 18 ist fest und gegebenenfalls gefedert mit dem Fahrgestell 14 verbunden.

Die Aufnahmevorrichtung 20 ist in herkömmlicher Weise als eine sogenannte Pick-Up ausgebildet, die auf dem Boden liegendes Gut mit umlaufenden Zinken aufnimmt und es rückwärts in Richtung des Ballenpreßraums 12 fördert. Es kann zusätzlich stromabwärts eine Schneidvorrichtung von ebenfalls bekannter Bauweise vorgesehen werden, die das Gut auf dem Weg zwischen der Aufnahmevorrichtung 20 und einem Einlass 40 in den Ballenpreßraum 12 zerkleinert.

Die ortsfesten Drehkörper 24 sind als Rollen oder Walzen aus Stahl und erforderlichenfalls beschichtet mit Kunststoff ausgebildet. Die Drehkörper 24 sind entweder auf einer Achse drehbar gelagert oder weisen Wellenstummel auf, die in Lagern in dem Fahrgestell 14 drehbar aufgenommen werden. Die Drehkörper 24 sind von unterschiedlichem Durchmesser und weisen gegebenenfalls Leitmittel wie Stege, Erhebungen und dergleichen für das Preßmittel 34 auf. In diesem speziellen Ausführungsbeispiel sind insgesamt sechs ortsfeste Drehkörper 24 vorgesehen, nämlich vorne oben, vorne unten, vorne mitte, mitte oben, mitte unten und hinten, die im einzelnen mit 24a bis 24f bezeichnet werden. Die Drehkörper 24 erstrecken sich mindestens über die gesamte Breite des Ballenpreßraums 12 und gegebenenfalls darüber hinaus. Wenigstens einer der Drehkörper 24 ist antreibbar. Alle ortsfesten Drehkörper 24 - außer dem vorne unten - liegen nahe einer im wesentlichen horizontalen Ebene oberhalb des Ballenpreßraums 12. Der hintere Drehkörper 24f befindet sich in einem oberen rückwärtigen Eckbereich des Fahrgestells 14 und ist ungefähr gleich weit von den Drehkörpern 32c, 32d entfernt, wenn sich der Träger 26 in einer seiner Endstellungen befindet.

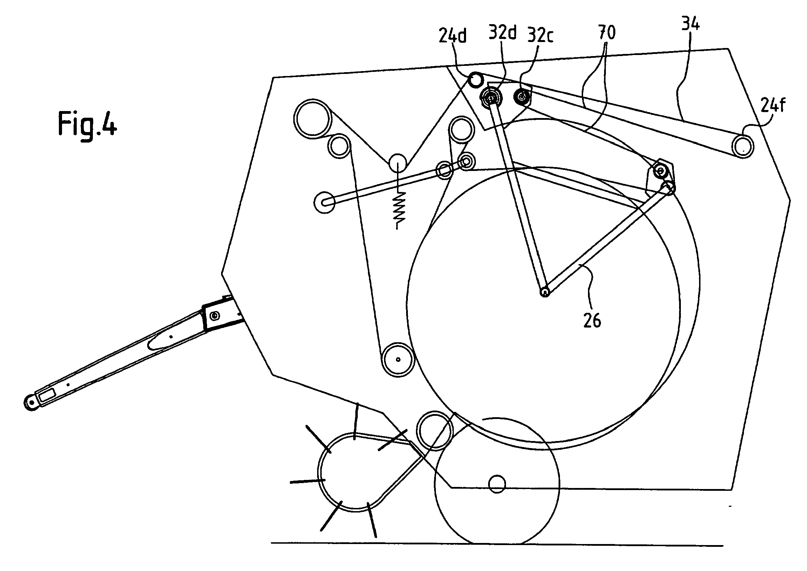

Der Träger 26 ist im wesentlichen in der Form eines Dreiecks mit einem ersten und einem zweiten Schenkel 42 und 44 ausgebildet, die mittels einer Spange 46 starr verbunden werden. Der erste und der zweite Schenkel 42 und 44 verlaufen divergierend zueinander, treffen sich jedoch in einem Lager 48, das auf einem Lagerteil 50 an der Außenseite der Seitenwand 38 aufgenommen wird. Der Lagerteil 50 befindet sich direkt im oder nahe zum Zentrum des Ballenpreßraums 12 bzw. der Seitenwand 38. Auf jeder Seite der Rundballenpresse 10 ist ein Träger 26 und ein Lagerteil 50 vorgesehen, und zwar jeweils an der Außenseite der Seitenwand 38. Am radial außenliegenden Endbereich des ersten Schenkels 42 ist ein erster und ein zweiter beweglicher Drehkörper 32a, 32b und an dem radial außenliegenden Endbereich des zweiten Schenkels 44 ist ein erster und ein zweiter beweglicher Drehkörper 32c, 32d vorgesehen, die jeweils frei drehbar von dem Träger 26 aufgenommen werden. Die ersten und die zweiten Drehkörper 32a bis 32d verlaufen parallelachsig und jeweils mit geringem Abstand zueinander. Der erste Drehkörper 32a ist direkt an dem vorderen Schenkel 42 und der zweite Drehkörper 32d ist direkt an dem zweiten Schenkel 44 angebracht, während der jeweils dazugehörige Drehkörper 32b und 32c an einem von dem jeweiligen Schenkel 42, 44 abstehenden Arm 51 angebracht ist. Der zweite Drehkörper 32b des ersten Schenkels 42 befindet sich radial weiter außen als der erste 32a. Die Verstellung des Trägers 26 erfolgt über einen nicht gezeigten Stellmotor, z. B. in der Art eines Hydraulikzylinders, eines drehenden Hydraulikmotors mit einem Getriebe, eines Elektro- oder Pneumatikmotors, oder dergleichen. Der Träger 26 kann zwischen zwei Endstellungen schwenken, nämlich einer unteren, in der sich die Drehkörper 32a bis 32d im wesentlichen nahe einer horizontalen Ebene unterhalb des Ballenpreßraums 12 befinden, und einer um nahezu 180 Grad nach oben versetzten Stellung, in der die Drehkörper 32c, 32d des zweiten Schenkels 44 zwischen dem mitte oberen und dem hinteren ortsfesten Drehkörper 24d und 24f zu liegen kommen - sh. Figur 4. Die Drehkörper 32a bis 32d sind den Drehkörpern 24 vergleichbar ausgebildet und erstrecken sich ebenfalls mindestens über die Breite des Ballenpreßraums 12. Die maximale radiale Erstreckung des Trägers 26 ausgehend von dem Lagerteil 50 ist geringer als der Abstand zwischen dem Lagerteil 50 und der hinteren ortsfesten Rolle 24f. Der Träger 26 kann anstatt als Fachwerk auch flächig ausgebildet sein und somit gleichzeitig die Seitenwand 38 bilden,

Der Spannmechanismus 28 enthält einen Spannarm 52, zwei bewegliche, beabstandete Drehkörper 32e und ein nicht gezeigtes Spannelement. Der Spannarm 52 und das Spannelement befinden sich jeweils einmal auf jeder Seite der Rundballenpresse 10. Bei diesem Ausführungsbeispiel ist jeder Spannarm 52 im Bereich zwischen dem orstfesten Drehkörper 24b vorne unten und dem ortsfesten Drehkörper 24c vorne mitte vertikal schwenkbar in einem Lager 54 gelagert und erstreckt sich vertikal bis unter den mitte unteren Drehkörper 24e. Die Drehkörper 32e befinden sich an dem radial außenliegenden Endbereich des Spannarms 52. Das Spannelement ist in üblicher Weise als eine mechanische Feder oder als ein Hydraulikmotor ausgebildet, der gegen einen evtl. veränderbaren Widerstand bewegbar ist. Ein solcher Widerstand kann mittels einer vorzugsweise verstellbaren Drossel in einem Hydraulikkreis aufgebaut werden, wie dies an sich bekannt ist. Das Maß des Widerstands bestimmt zugleich die Dichte und das maximale Gewicht des Ballens 36. Der Spannarm 52 ist so ausgebildet oder angeordnet, daß er nicht mit dem Träger 26 kollidiert. Vorzugsweise sind die Spannarme 52 im Bereich der Drehkörper 32e verwindungssteif miteinander verbunden und schwenken gemeinsam wie ein auf dem Kopf stehendes "U".

Der zweite Spannmechanismus 30 ist mehr symbolisch als strukturell dargestellt und enthält einen federbelasteten Drehkörper 32f, der das Preßmittel 34 stets zusätzlich zu dem Spannmechanismus 28 gespannt hält und einer Steuerung nicht unbedingt bedarf.

Die Drehkörper 32, im einzelnen 32a - 32f, sind ortsbeweglich, wobei ihre Lage von der Spannung in dem Pressmittel 34 und der Stellung des Trägers 26 abhängt. Die auf dem Träger 26 gelagerten Drehkörper 32a bis 32d erstrecken sich wenigstens vollkommen über den Ballenpreßraum 12, so daß sie auf der Außenkante des rückwärtigen Teils der Seitenwände 38 oder mit Abstand zu dieser bewegt werden können.

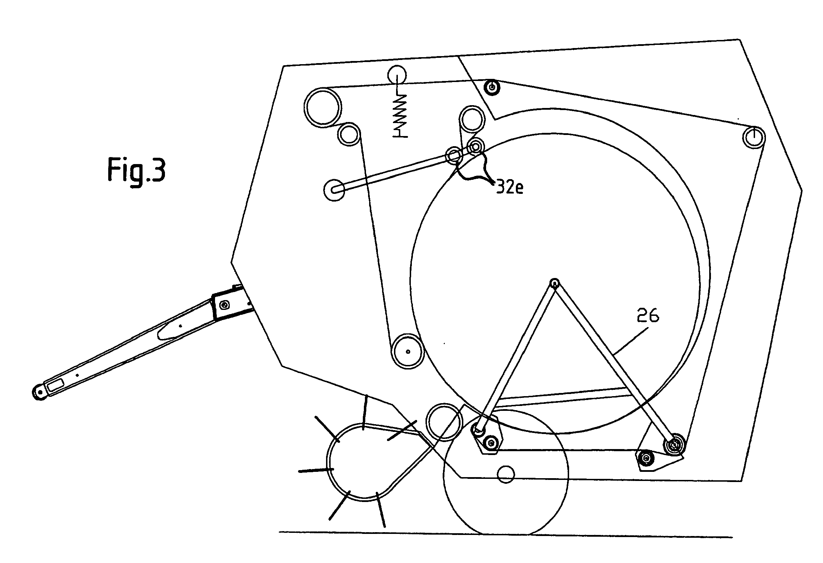

Das Pressmittel 34 setzt sich in diesem Ausführungsbeispiel aus einer Vielzahl parallel zueinander verlaufender, schmaler, flacher, flexibler und endlos ausgebildeter Riemen zusammen, wie dies an sich bekannt ist. Dieses Pressmittel 34 verläuft unter anderem über die ortsfesten und die beweglichen Drehkörper 32 und wird mittels des Spannmechanismus 28 und des zweiten Spannmechanismus 30 stets so fest an dem wenigstens einen drehbar angetriebenen ortsfesten Drehkörper 24 angelegt, daß seine Mitnahme gewährleistet ist. Wie die Darstellung der Figuren 1 und 3 zeigt, kann das Pressmittel 34 einen Anfangszustand einnehmen, in dem es an dem Einlass 40 einen sich hauptsächlich vertikal erstreckenden dreieckigen Ballenpreßraum 12 bildet, und einen Endzustand, in dem es sich wie eine große Schlaufe um den Ballen 36 schlingt. Der Lauf des Pressmittels 34 ist bei einem leeren Ballenpreßraum 12 ausgehend von dem rückwärtigen Drehkörper 24c und im Uhrzeigerdrehsinn gesehen der folgende: über den ortsfesten Drehkörper 24f, unter den Drehkörper 32d, über den Drehkörper 32c, unter den Drehkörpern 32b und 32a, zwischen den Drehkörpern 32e hindurch, oben über den mittleren unteren orstfesten Drehkörper 24e, zwischen den Drehkörpern 32e zurück, unter den vorderen unteren ortsfesten Drehkörper 24b, über den vorderen mittleren ortsfesten Drehkörper 24c und um diesen herum, über und um ca. 240 Grad herum um den vorderen oberen Drehkörper 24a, unter den Drehkörper 32f des zweiten Spannmechanismus 30, über den mitte oberen ortsfesten Drehkörper 24d zurück zu dem rückwärtigen ortsfesten Drehkörper 24f - sh. Figur 1.

Der Ballen 36 befindet sich während seiner Bildung in dem Ballenpreßraum 12 und wird von dem Pressmittel 34 größtenteils umschlungen, fällt aber aus dem Ballenpreßraum 12, d. h. dem Raum zwischen den Seitenwänden 38, auf den Boden, sobald - wie später beschrieben wird - der Träger 26 mit den beweglichen Drehkörpern 32 mit Blick auf die Zeichnung entgegen dem Uhrzeigerdrehsinn nach oben schwenkt.

Die Seitenwände 38 entsprechen in ihrer Größe und Form wenigstens im rückwärtigen Bereich im wesentlichen den Stirnflächen eines fertigen Ballens 36 in seiner größten Ausführung. Die Seitenwände 38 sind von dem Fahrgestell 14 getrennt ausgebildet, wobei das Fahrgestell 14 eigene Seitenwände aufweisen kann, die hauptsächlich die Funktion von Schutzen aufweisen. Anders als bei einem großen Teil des Standes der Technik erstrecken sich die Seitenwände 38 einteilig über die gesamte Stirnfläche des Ballenpreßraums 12. Die Seitenwände 38 sind vorzugsweise aus Stahlblech gebildet, verlaufen evtl. leicht divergierend nach hinten und sind an geeigneten Stellen versteift. Die Seitenwände 38 können zudem quer zur Fahrtrichtung begrenzt beweglich gelagert sein, damit sie beim Auswerfen des Ballens 36 dessen Anlagekraft an ihrer Innenseite reduzieren, so daß dieser leichter und somit schneller austritt. Es würde z. B. bereits ausreichen, wenn die Seitenwände 38 um wenige Zentimeter voneinander entfernt würden. Dieses Merkmal kann für sich alleine ausgeführt werden und stellt eine Innovation für sich dar. Die Seitenwände 38 können mit den Trägern 26 beweglich ausgebildet werden.

Der Einlaß 40 wird oben von dem vorderen unteren Drehkörper 24b mit dem darüber verlaufenden Preßmittel 34 und unten von einer Rolle 60 begrenzt. Allerdings könnte die untere Begrenzung auch von dem Drehkörper 32a gebildet werden. Der Einlaß 40 stellt im wesentlichen die Stelle dar, an der der Ballen 36 nicht von dem Preßmittel 34 umgeben ist.

Die vorzugsweise angetriebene Rolle 60 ist stromabwärts der Aufnahmevorrichtung 20 und an diese angrenzend vorgesehen. Vorzugsweise ist die Rolle 60 auf ihrer Umfangsfläche mit nicht näher bezeichneten Mitnehmern versehen, die einen sicheren Transport des Ernteguts zwischen der Aufnahmevorrichtung 20 und dem Ballenpreßraum 12 gewährleisten. Diese Rolle 60 bildet die dem vorderen unteren Drehkörper 24b gegenüberliegende, untere Begrenzung des Einlasses 40 und befindet sich in unmittelbarer Nachbarschaft zu dem ersten, vorderen Drehkörper 32a an dem ersten Schenkel 42, wenn sich der Träger 26 in seiner unteren, vorderen Endstellung befindet.

Nach alledem gibt sich folgender Aufbau und Funktion der erfindungsgemäßen Rundballenpresse 10 aus der vorherigen Beschreibung.

Solange der Rundballenpresse 10 kein Gut zugeführt wird und der Ballenpreßraum 12 leer ist, befindet sich der Träger 26 in seiner unteren, vorderen Endstellung, in der sich der erste, vordere Drehkörper 32a an dem ersten Schenkel 42 nahe der Rolle 60 befindet und sich die Drehkörper 32a - 32d nahe einer im wesentlichen horizontalen Ebene befinden. Der Spannarm 52 wird hinten nach unten gedrängt, sodaß er eine unter ca. 30 Grad verlaufende Neigung zur Horizontalen einnimmt und sich seine Drehkörper 32e nahe dem vorderen unteren ortsfesten Drehkörper 24b befinden. Das Pressmittel 34 bildet zwischen den beweglichen Drehkörpern 32e am Ende des Spannarms 52 und dem dazwischenliegenden mittleren unteren Drehkörper 24e eine Schlaufe 66. Schließlich erstreckt sich ein Abschnitt des Pressmittels 34 über die Innenseite der Rolle 60 und dem rückwärtigen Drehkörper 32e auf dem Spannarm 52 und somit dem Einlass 40 gegenüber. Dieser Zustand entspricht dem in Figur 1 gezeigten.

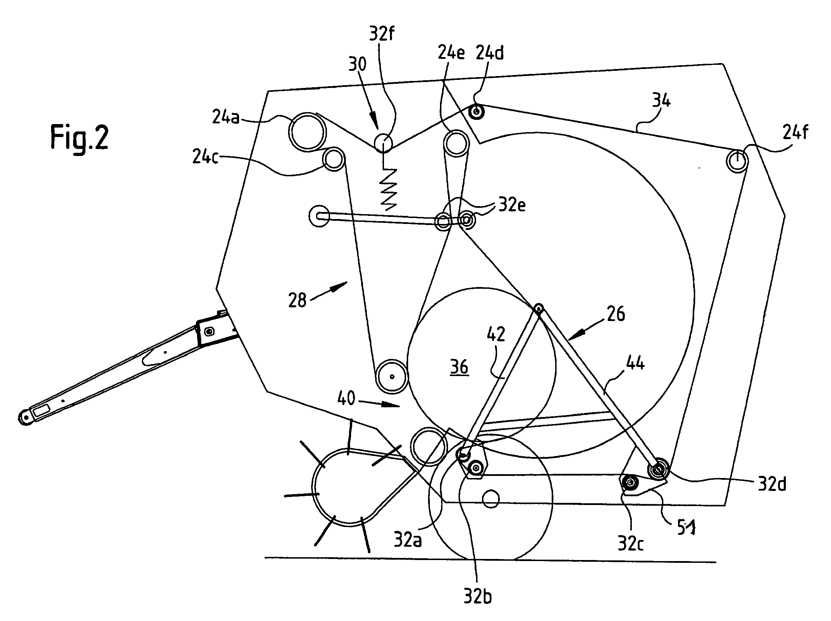

Sobald über die Aufnahmevorrichtung 20 Erntegut zu dem Ballenpreßraum 12 gefördert wird, wird es den Abschnitt des Pressmittels 34 gegenüber dem Einlaß 40 zu dem Innern des Ballenpreßraums 12 hin auslenken, was bewirkt, daß der Spannarm 52 anfängt, sich nach oben zu bewegen, um die zunächst große Schlaufe 66 zu verkürzen. Mit zunehmendem Durchmesser bewegt sich der Spannarm 52 weiter nach oben, bis er schließlich seine in Figur 3 gezeigte Stellung einnimmt. Während der Ballendurchmesser zunimmt, bleibt der Träger 26 in seiner in den Figuren 1 bis 3 gezeigten Stellung.

Wenn der Ballen 36 seinen größten Durchmesser erreicht hat-sh. Figur 4 - ruht der Ballen 36 vorne auf der Rolle 60 und dem angrenzenden ersten Drehkörper 32a. Im übrigen wird der Ballen 36 von der Spannung in dem Pressmittel 34 außer Kontakt mit dem ersten und dem zweiten Drehkörper 32c, 32d und den über sie verlaufenden Riemenabschnitten gehalten. Bei Bedarf kann zwischen den beiden zweiten Schenkeln 44 eine weitere nicht gezeigte Rolle vorgesehen werden, auf der sich der Ballen 36 abstützt. Aus Figur 3 ist auch erkennbar, daß aufgrund des radialen Versatzes des ersten und des zweiten Drehkörpers 32a und 32b an dem ersten Schenkel 42 die einander benachbarten Trume des Pressmittels 34 außer Eingriff gehalten werden. In diesem Zustand kann der Ballen 36 gebunden oder mit Folie oder Netz umwickelt werden, sodaß er nach dem Austritt aus dem Ballenpreßraum 12 nicht auseinander fällt.

Nachdem der Ballen 36 vollkommen gebildet ist, kann er aus dem Ballenpreßraum 12 ausgeworfen werden, wozu der Träger 26 entgegen dem Uhrzeigerdrehsinn nach hinten und oben geschwenkt wird. Insbesondere aufgrund der Anlenkung des Trägers 26 im oder nahe dem Zentrum der Seitenwände 38 wird der Ballen 36 bereits nach einem kurzen Schwenkweg des Trägers 26 von z. B. ca. 90 Grad auf den Boden fallen. Nach einem Schwenkweg von z.B. ca. 180 Grad befindet sich der erste Drehkörper 32a an dem ersten Schenkel 42 soweit über dem Boden, daß die Rundballenpresse 10 weiter nach vorne gefahren werden kann, ohne an den Ballen 36 anzustoßen. Wenn sich der Träger 26 in seiner oberen Endlage befindet, bildet das Pressmittel 34 eine zweite Schlaufe 70 um den Drehkörper 32c, sodaß der zuvor um den Ballen 36 geschlungene Abschnitt des Pressmittels 34 von dieser zweiten Schlaufe 70 aufgenommen und das Pressmittel 34 gespannt gehalten wird. In dieser Situation befinden sich der erste und der zweite Drehkörper 32a, 32b zwischen dem mittig oben liegenden Drehkörper 24d und dem rückwärtigen Drehkörper 24f.

Sobald der Ballen 36 aus dem Ballenpreßraum 12 herausgerollt ist, wird der Träger 26 wieder nach unten in die in Figur 1 gezeigte Stellung geschwenkt. Auf diesem Weg wird das Pressmittel 34 wieder gespannt und somit der Spannarm 52 wieder nach unten bewegt.

## Patentansprüche

1. Rundballenpresse (10) mit wenigstens einem flexiblen endlosen Pressmittel (34), das über ortsfeste und bewegliche Drehkörper (24, 32) geführt ist und einen Ballenpreßraum (12) umfangsseitig im wesentlichen umgibt, mit:
a) einem vertikal schwenkbaren Träger (26) mit einem Drehkörper (32a) einerseits und zwei Drehkörpern (32c, 32d) andererseits,
b) ortsfest gelagerten, oberen vorderen und rückwärtigen Drehkörpern (24a) bis (24f), von denen einer der anderen Seite des Einlasses (40) zugelegen ist,
c) wenigstens einem Spannmechanismus (28) mit wenigstens einem Drehkörper (32e)
**dadurch gekennzeichnet, daß** der eine Drehkörper (32a) einer Seite eines Einlasses (40) des Ballenpreßraums (12) zugelegen ist und
ein Trum des Pressmittels (34) durch einen Spalt zwischen den beiden Drehkörpern (32c, 32d) andererseits verläuft.

2. Rundballenpresse nach Anspruch 1, **dadurch gekennzeichnet, daß** der Träger (26) um eine der Mittenachse des Ballenpreßraums (12) benachbarte oder mit dieser zusammenfallende gedachte oder tatsächliche Achse schwenkbar ist.

3. Rundballenpresse nach Anspruch 1 oder 2, **dadurch gekennzeichnet, daß** mehrere ortsfeste Drehkörper (24d, 24f) oberhalb des Ballenpreßraums (12) angeordnet sind und die zwei Drehkörper (32c, 32d) andererseits in den Bereich zwischen zwei festen Drehkörpern (24d, 24f) schwenkbar sind.

4. Rundballenpresse nach einem oder mehreren der vorherigen Ansprüche, **dadurch gekennzeichnet, daß** dem einen Drehkörper (32a) einerseits ein weiterer Drehkörper (32b) benachbart ist, der gegenüber dem Schwenkpunkt des Trägers (26) radial versetzt ist.

5. Rundballenpresse nach einem oder mehreren der vorherigen Ansprüche, **dadurch gekennzeichnet, daß** der Träger (26) in der Form eines Dreiecks ausgebildet ist, in dessen einem Winkelbereich er innerhalb oder außerhalb von den Ballenpreßraum (12) begrenzenden Seitenwänden (38) schwenkbar gelagert ist.

6. Rundballenpresse nach einem oder mehreren der Ansprüche 1 bis 4, **dadurch gekennzeichnet, daß** der Träger (26) gleichzeitig als Seitenwand (38) ausgebildet ist.

7. Rundballenpresse nach einem oder mehreren der vorherigen Ansprüche, **dadurch gekennzeichnet, daß** ein ortsfester Drehkörper (24f) in beiden Endstellungen des Trägers (26) im wesentlichen die gleiche Entfernung zu den Drehkörpern (32c, 32d) andererseits aufweist.

8. Rundballenpresse nach einem oder mehreren der vorherigen Ansprüche, **dadurch gekennzeichnet, daß** die Seitenwände (38) gegenüber einem Fahrgestell (14) der Rundballenpresse verstellbar sind.

9. Rundballenpresse nach einem oder mehreren der vorherigen Ansprüche, **dadurch gekennzeichnet, daß** sich die Drehkörper (32a) bis (32d) des Trägers (26) außerhalb des Ballenpreßraums (12) erstrecken.

## Claims

1. A round baler (10) with at least one flexible, endless compacting means (34) which is guided over positionally fixed and movable rotary bodies (24, 32) and substantially surrounds a bale compaction chamber (12) peripherally, with:
a) a vertically pivoting carrier (26) with a rotary body (32a) on the one side and two rotary bodies (32c, 32d) on the other side,
b) positionally fixed upper front and rear rotary bodies (24a) to (24c), of which one is disposed on the other side of the inlet (40),
c) at least one tensioning mechanism (28) with at least one rotary body (32e),
**characterized in that** the one rotary body (32a) is disposed on one side of an inlet (40) of the bale compaction chamber (12) and one run of the compacting means (34) runs through a gap between the two rotary bodies (32c, 32d) on the other side.

2. A round baler according to claim 1, **characterized in that** the carrier (26) can pivot about a conceptual or actual axis adjacent to or coinciding with the central axis of the bale compaction chamber (12).

3. A round baler according to claim 1 or 2, **characterized in that** a plurality of positionally fixed rotary bodies (24d, 24f) are arranged above the bale compaction chamber (12) and the two rotary bodies (32c, 32d) on the other side can pivot in the region between two fixed rotary bodies (24d, 24f).

4. A round baler according to one or more of the preceding claims, **characterized in that** the a further rotary body (32b) is adjacent the one rotary body (32a) on the one side and is radially offset relative to the centre of gravity of the carrier (26).

5. A round baler according to one or more of the preceding claims, **characterized in that** the carrier (26) is in the form of a triangle in one of whose corner regions it is pivotally mounted within or outside sidewalls (38) bounding the bale compaction chamber (12).

6. A round baler according to one or more of claims 1 to 4, **characterized in that** the carrier (26) is formed simultaneously as a sidewall (38)

7. A round baler according to one or more of the preceding claims, **characterized in that** one positionally fixed rotary body (24f) has substantially the same distance from the rotary bodies (32c, 32d) on the other side in both end positions of the carrier (26).

8. A round baler according to one or more of the preceding claims, **characterized in that** the sidewalls (38) can be adjusted relative to a chassis (14) of the round baler.

9. A round baler according to one or more of the preceding claims, **characterized in that** the rotary bodies (32a) to (32d) of the carrier (26) extend outside the bale compaction chamber (12).

## Revendications

1. Ramasseuse-presse à balles cylindriques (10) avec au moins un moyen de pression flexible sans fin (34) qui est guidé par des corps rotatifs fixes et mobiles (24, 32) et qui entoure sensiblement un espace de ramasseuse-presse à balles (12) du côté de la circonférence, avec :
a) un support pivotant verticalement (26) avec un corps rotatif (32a) d'une part et deux corps rotatifs (32c, 32d) d'autre part,
b) des corps rotatifs supérieurs avant et arrière logés fixement (24a) à (24f) dont l'un est ajouté de l'autre côté de l'entrée (40),
c) au moins un mécanisme tendeur (28) avec au moins un corps rotatif (32e),
**caractérisée en ce que** le corps rotatif (32a) est ajouté d'un côté d'une entrée (40) de l'espace de ramasseuse-presse à balles (12) et un brin du moyen de pression (34) passe par une fente entre les deux corps rotatifs (32c, 32d) d'autre part.

2. Ramasseuse-presse à balles cylindriques selon la revendication 1, **caractérisée en ce que** le support (26) peut pivoter autour d'un axe imaginaire ou réel adjacent à l'axe médian de l'espace de ramasseuse-presse à balles (12) ou coïncidant avec celui-ci.

3. Ramasseuse-presse à balles cylindriques selon la revendication 1 ou 2, **caractérisée en ce que** plusieurs corps rotatifs fixes (24d, 24f) sont disposés au-dessus de l'espace de ramasseuse-presse à balles (12) et **en ce que**, d'autre part, les deux corps rotatifs (32c, 32d) peuvent pivoter dans la zone entre deux corps rotatifs fixes (24d, 24f).

4. Ramasseuse-presse à balles cylindriques selon une ou plusieurs des revendications précédentes, **caractérisée en ce qu'** un autre corps rotatif (32b) qui est décalé radialement par rapport au point de pivotement du support (26), est adjacent au corps rotatif (32a) d'une part.

5. Ramasseuse-presse à balles cylindriques selon une ou plusieurs des revendications précédentes, **caractérisée en ce que** le support (26) a la forme d'un triangle dans une zone angulaire duquel il est logé de manière pivotante à l'intérieur ou à l'extérieur des parois latérales (38) délimitant l'espace de ramasseuse-presse à balles (12).

6. Ramasseuse-presse à balles cylindriques selon une ou plusieurs des revendications 1 à 4, **caractérisée en ce que** le support (26) est configuré en même temps comme une paroi latérale (38).

7. Ramasseuse-presse à balles cylindriques selon une ou plusieurs des revendications précédentes, **caractérisée en ce qu'**un corps rotatif fixe (24f) présente sensiblement la même distance par rapport aux corps rotatifs (32c, 32d) d'autre part dans les deux positions extrêmes du support (26).

8. Ramasseuse-presse à balles cylindriques selon une ou plusieurs des revendications précédentes, **caractérisée en ce que** les parois latérales (38) sont ajustables par rapport à un châssis (14) de la ramasseuse-presse à balles cylindriques.

9. Ramasseuse-presse à balles cylindriques selon une ou plusieurs des revendications précédentes, **caractérisée en ce que** les corps rotatifs (32a) à (32d) du support (26) s'étendent à l'extérieur de l'espace de ramasseuse-presse à balles (12).
